# EUROPÄISCHE PATENTSCHRIFT

(11) **EP 2 557 576 B1**
(45) Veröffentlichungstag und Bekanntmachung des Hinweises auf die Patenterteilung: **29.04.2020**
(21) Anmeldenummer: 12176731.3
(22) Anmeldetag: 17.07.2012
(51) Int. Cl.: H01F 7/08

(54) **Magnetanker**
Magnetic armature
Armature magnétique

(30) Priorität: 09.12.2011 DE 102011088132; 09.08.2011 DE 102011080687
(43) Veröffentlichungstag der Anmeldung: 13.02.2013
(73) Patentinhaber: Robert Bosch GmbH, 70442 Stuttgart (DE)
(72) Erfinder: Maier, Dieter, 87549 Rettenberg (DE); Schmid, Johannes, 87509 Immenstadt (DE); Schumacher, Matthias, 71287 Weissach (DE); Burghardt, Andreas, 70176 Stuttgart (DE); Walter, Rainer, 74385 Pleidelsheim (DE); Engelberg, Ralph, 71254 Ditzingen (DE); Rager, Jochen, 72406 Bisingen (DE); Heinstein, Axel, 71299 Wimsheim (DE)

(56) Entgegenhaltungen:
- WO-A2-89/04919
- DE-A1-102009 047 525

## Beschreibung

### Stand der Technik

Die vorliegende Erfindung betrifft einen Magnetanker für einen Magnetaktor, der z.B. in einem Magnetventil verwendet werden kann.

Kraftstoffeinspritzventile des Standes der Technik, wie sie z. B. in Einspritzanlagen für Benzinmotoren eingesetzt werden, sind beispielsweise als Magnetschaltventile mit einer Spule und einem Magnetanker aufgebaut, der aus einem ferritischen, magnetischen Material ausgebildet ist und mit einer harten nichtmagnetischen Oberflächenschicht, z. B. aus Chrom, versehen ist. Dadurch kommt es bauartbedingt beim Aufbau und Abbau des Magnetfelds im Betrieb zu Wirbelstromverlusten und demzufolge zu einer Minderung der Schaltzeit bzw. Dynamik des Kraftstoffeinspritzventils. Zudem ist die Fertigung des Magnetankers sehr kostenintensiv und aufwendig. Außerdem ist die Beständigkeit gegenüber aggressiven Medien, wie z. B. Ethanol oder Harnstoff, die in den Kraftstoffen zunehmend enthalten sind, unzureichend, um eine befriedigende Dauerhaltbarkeit der Einspritzventile auch in Ländern mit starken Schwankungen bei der Kraftstoffqualität zu gewährleisten. Ferner ist die Einhaltung gesetzlicher Vorschriften, insbesondere hinsichtlich der Verwendung von gesundheitsgefährdenden Materialien, zukünftig sicherzustellen.

Ein Magnetanker nach dem Oberbegriff des Anspruchs 1 ist in DE 10 2009 047 525 A1 gezeigt.

### Offenbarung der Erfindung

Der erfindungsgemäße Magnetanker mit den Merkmalen des Anspruchs 1 weist demgegenüber den Vorteil auf, dass dieser einen wirbelstromminimierten und effizienzgesteigerten Magnetkreis aufweist, der eine höhere Dynamik mit kurzen Schaltzeiten, z.B. eines Ventils, realisierbar macht. Ferner wird durch die Verwendung geeigneter Materialien eine verbesserte Robustheit bzw. Verschleißfestigkeit gegenüber aggressiven Medien wie Ethanol usw. erreicht. Dies wird dadurch erreicht, dass der Magnetanker wenigstens einen magnetischen Bereich und wenigstens einen nichtmagnetischen Bereich umfasst. Hierbei ist der Magnetanker als einstückiges Bauteil mit einer ersten und zweiten Ankerstirnseite ausgebildet und die magnetischen und nichtmagnetischen Bereiche sind stoffschlüssig mittels eines Zweikomponenten-Pulver-Spritzgussverfahrens miteinander verbunden. Zudem reichen der magnetische Bereich und der nichtmagnetische Bereich in axialer Richtung zumindest bis zur ersten Ankerstirnseite. Dadurch kann die Fertigung des einstückigen Magnetankers als Zweikomponenten-Pulverspritzguss-Bauteil auf einfache Weise in einem einzigen Prozessschritt zeit- und kostenoptimiert als Massenteil realisiert werden. Das Zweikomponenten-Pulverspritzgussverfahren beinhaltet dabei einen Keramik-Spritzgussschritt (Ceramic Injection Molding, CIM) und/oder einen Metallpulver-Spritzgussschritt (Metal Injection Molding, MIM).

Die Unteransprüche zeigen bevorzugte Weiterbildungen der Erfindung.

Für eine möglichst große Reduzierung der Wirbelströme ist der nichtmagnetische Bereich vorzugsweise elektrisch nichtleitfähig ausgebildet. Für den nichtmagnetischen Bereich kann hierbei vorzugsweise ein korrosionsbeständiger, kostengünstiger Werkstoff ohne besondere Anforderungen an die magnetische Leitfähigkeit, wie beispielsweise FeCr oder Keramik, gewählt werden, der die Gesamtkosten des Magnetankers reduziert.

Vorzugsweise bildet der zumindest eine nichtmagnetische Bereich einen Anschlag an der ersten und/oder der zweiten Ankerstirnseite. Dadurch wird eine kompakte Bauform des einstückigen Magnetankers realisiert, die zu einem minimierten Bauvolumen des gesamten Kraftstoffeinspritzventils beiträgt. Ferner wird durch die Verwendung harter nichtmagnetischer Werkstoffe, wie z. B. Hartmetall oder Keramik (vorzugsweise ZrO₂), eine hohe Verschleißfestigkeit für einen Ventilnadelanschlag erreicht. Zudem wird dadurch ein magnetisches und hydraulisches Kleben der Ventilnadel an der Ankerstirnseite beim Ventilbetrieb verhindert.

Erfindungsgemäss ist zumindest ein nichtmagnetischer Bereich als Zylinderbereich oder in Axialrichtung als sich verjüngender Bereich ausgebildet, der jeweils die zentrale Durchgangsöffnung umgibt. Hierdurch kann insbesondere in Bereichen ohne magnetische Funktion ein nichtmagnetischer und somit kostengünstigerer Werkstoff eingesetzt werden.

Vorzugsweise sind mehrere nichtmagnetische Bereiche elektrisch nichtleitfähig und segmentartig ausgebildet. Dadurch werden Trennschichten für die Wirbelströme geschaffen, die die Wirbelstromverluste im Anker minimieren. Weiter bevorzugt sind die mehreren nichtmagnetischen Bereiche in Umfangsrichtung gleich beabstandet angeordnet.

Weiterhin bevorzugt sind der magnetische Bereich und der nichtmagnetische Bereich in radialer Richtung aneinander angrenzend angeordnet. Dadurch wird ein Magnetanker bereitgestellt, der an seiner äußersten Seite mit einem magnetischen Bereich und an seiner innersten Seite mit einem nichtmagnetischen Bereich versehen ist, der aus einem im Vergleich zum magnetischen Bereich kostengünstigeren Werkstoff besteht und eine verschleißbeständige Führung des Ankers auf der Ventilnadel ermöglicht.

Weiterhin bevorzugt steht ein nichtmagnetischer Bereich an der ersten und/oder der zweiten Ankerstirnseite vor. Ferner können hierdurch hinreichend große Anschlagflächen mit möglichst geringer Dicke und möglichst geringem Überstand aus kostengünstigem Material mit hoher Verschleißfestigkeit realisiert werden. Somit wird eine kostengünstige Alternative zu herkömmlichen Beschichtungsverfahren, wie zum Beispiel Hartverchromen bereitgestellt. Auch wird dadurch eine Gefahr des Anhaftens eines Ventilbauteils am magnetischen Bereich vermieden.

Der Magnetanker mit einer zentralen Durchgangsöffnung ausgebildet. Hierdurch wird eine betriebssichere Führung einer darin angeordneten Ventilnadel sichergestellt.

Aufgrund der PIM-(Powder Injection Molding)Technik können Bohrungen im Magnetanker zudem zur Minimierung der hydraulischen Drosselung variabler gestaltet werden und insbesondere im für den Magnetfluss nicht relevanten nichtmagnetische Bereich vergrößert werden. Dadurch kann Ankermaterial, das nicht für den Magnetfluss benötigt wird, gezielt ausgespart werden bzw. entfallen. Dies trägt aufgrund der Minimierung der bewegten Masse wesentlich zu einer Verbesserung der Schaltzeiten und z.B. Optimierung des Einspritzverhaltens eines Kraftstoffeinspritzventils, bei.

Vorzugsweise sind die nichtmagnetischen Bereiche aus verschleißfestem Material ausgebildet und verlaufen in radialer Richtung über die gesamte Axiallänge des Magnetankers. Das verschleißfeste Material weist weiter bevorzugt eine hohe Beständigkeit gegenüber Kraftstoffen und eventuellen Zusatzstoffen im Kraftstoff, wie z. B: Methanol, Harnstoff, etc., auf. Weiterhin bevorzugt sind die magnetischen Bereiche aus einem Magnetwerkstoff mit hoher Sättigungsinduktion ausgebildet und die nichtmagnetischen Bereiche aus einem Keramikwerkstoff oder einem Hartmetall ausgebildet. Hierdurch wird die Verwendung von teurem und schwer zerspanbarem Magnetwerkstoff, wie z. B. aus FeCo oder FeCrCo, gezielt in den Bereichen relevanter Magnetfeldlinien des Magnetankers ermöglicht, die einen signifikanten Beitrag zur Magnetkraft des Magnetankers liefern. Zudem kann durch den Einsatz eines Magnetwerkstoffs, wie z. B. FeCrCo, mit mindestens 13% Cr-Anteil oder alternativ FeCo mit mindestens 35 % Co-Anteil, eine erhöhte Robustheit gegen Benzinkraftstoff, Korrosion und Kavitation erreicht werden. Die billigere zweite Werkstoffkomponente wird für den nichtmagnetischen Bereich außerhalb der relevanten Magnetfeldlinien eingesetzt, wodurch die Gesamtkosten des Magnetankers minimiert werden. Vorzugsweise übernimmt zweite Werkstoffkomponente auch die Funktion des nichtmagnetischen, harten Anschlags. Ferner resultiert daraus eine deutliche Gewichtseinsparung mit einer damit verbundenen verbesserten Ventilfunktion. Besonders bevorzugt sind der magnetische Bereich und der nichtmagnetische Bereich in radialer Richtung aneinander angrenzend angeordnet.

### Kurze Beschreibung der Zeichnung

Nachfolgend werden Ausführungsbeispiele der Erfindung unter Bezugnahme auf die begleitende Zeichnung im Detail beschrieben. In der Zeichnung ist:
- Figur 1: eine vergrößerte schematische Schnittansicht eines Magnetankers gemäß einem ersten bevorzugten Ausführungsbeispiel der Erfindung,
- Figur 2: eine vergrößerte perspektivische Darstellung des Magnetankers gemäß einem zweiten bevorzugten Ausführungsbeispiel der Erfindung,
- Figur 3: eine vergrößerte schematische Schnittansicht des Magnetankers gemäß einem dritten bevorzugten Ausführungsbeispiel der Erfindung,
- Figur 4: eine vergrößerte Vorderansicht des Magnetankers gemäß einem vierten bevorzugten Ausführungsbeispiel der Erfindung,
- Figur 5: eine vergrößerte Vorderansicht des Magnetankers gemäß einem fünften bevorzugten Ausführungsbeispiel der Erfindung,
- Figur 6: eine vergrößerte schematische Schnittansicht des Magnetankers gemäß einem sechsten bevorzugten Ausführungsbeispiel der Erfindung,
- Figur 7: eine vergrößerte schematische Schnittansicht des Magnetankers gemäß einem siebten bevorzugten Ausführungsbeispiel der Erfindung, und

### Ausführungsformen der Erfindung

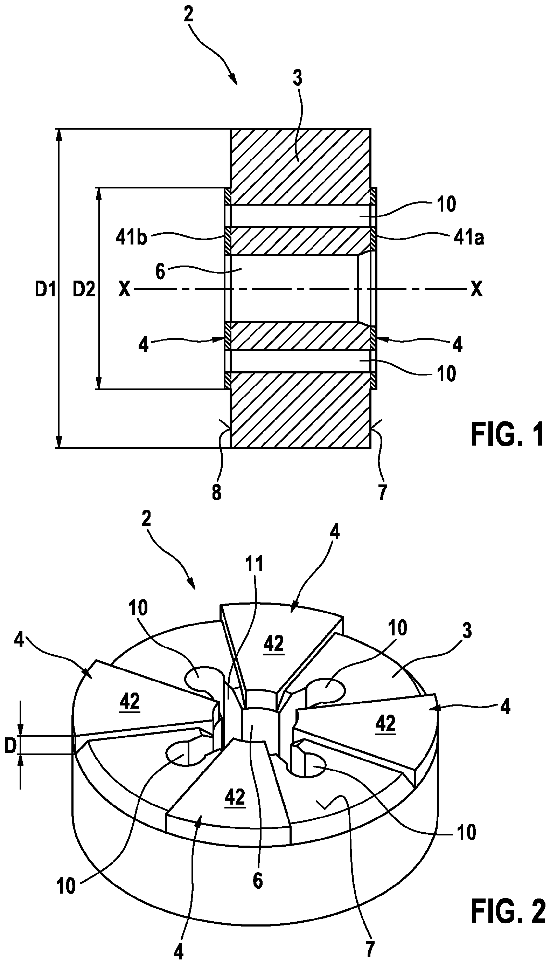

Nachfolgend werden unter Bezugnahme auf die Figuren 1 bis 7 bevorzugte Ausführungsbeispiele eines Magnetankers 2 detailliert beschrieben. Gleiche bzw. funktional gleiche Bauteile sind in den Ausführungsbeispielen mit den gleichen Bezugszeichen bezeichnet.

Wie aus Figur 1 ersichtlich, umfasst der einstückig ausgebildete Magnetanker 2 eines ersten Ausführungsbeispiels einen längs einer Mittelachse X-X verlaufenden zylindrischen magnetischen Bereich 3 und zwei nichtmagnetische Bereiche 4. Die nichtmagnetischen Bereiche 4 sind jeweils als dünne kreisförmige Schicht 41a , 41b auf einer ersten und zweiten Ankerstirnseite 7, 8 des Magnetankers 2 angeordnet und vorzugsweise in Form einer Keramikschicht oder Hartmetallschicht stoffschlüssig mittels eines Zweikomponenten-Pulver-Spritzgussverfahrens mit dem magnetischen Bereich 3 verbunden. Der magnetische Bereich 3 ist vorzugsweise aus Magnetwerkstoff mit hoher Sättigungsinduktion bei geringer elektrischer Leitfähigkeit, wie zum Beispiel FeCo, ausgebildet.

Wie aus Figur 1 weiter ersichtlich, weist der einteilige Magnetanker 2 ferner eine Durchgangsöffnung 6 auf, in der eine hier nicht sichtbare Ventilnadel geführt ist. Ferner sind vier konzentrisch zur Durchgangsöffnung 6 angeordnete Bohrungen 10 vorgesehen, von denen in Figur 1 lediglich zwei sichtbar sind. Jede Schicht 41a, 41b der nichtmagnetischen Bereiche 4 weist einen Durchmesser D2 auf, der kleiner als ein Durchmesser D1 der ersten bzw. zweiten Ankerstirnseite 7, 8 bemessen ist und radial lediglich die Durchgangsöffnung 6 und die Bohrungen 10 nicht überdeckt. Somit wird ein einstückig und kostengünstig herstellbarer Magnetanker 2 als Zweikomponenten-Pulverspritzguss-Bauteil mit reduzierten Wirbelstromverlusten sowie einer erhöhten magnetischen Effizienz bereitgestellt, bei dem die harten Schichten 41a, 41b als robuste und verschleißresistente Ankeranschläge dienen.

Im Gegensatz zum zuvor beschriebenen ersten Ausführungsbeispiel weist der Magnetanker 2 des zweiten Ausführungsbeispiels von Figur 2 auf dessen erster Ankerstirnseite 7 vier nichtmagnetischen Bereiche 4 auf, die als Teilflächenkörper 42 ausgebildet sind und in Umfangsrichtung in gleichem Abstand in einem Winkelbereich zwischen den Bohrungen 10 angeordnet sind. Die Teilflächenkörper 42 sind mittels des Zweikomponenten-Pulver-Spritzgussverfahrens gleichermaßen wie beim ersten Ausführungsbeispiel stoffschlüssig mit dem magnetischen Bereich 3 verbunden. Wie aus Figur 2 weiter ersichtlich, ist eine Dicke D der Teilflächenkörper 42 hierbei so bemessen, dass diese aus der ersten Ankerstirnseite 7 herausragen. Somit wird ein Ankeranschlag auf der ersten Ankerstirnseite 7 ohne Kontakt mit dem magnetischen Bereich 3 ermöglicht. Zudem ist die Durchgangsöffnung 6 durch jeweils eine radial verlaufende Ausnehmung 11 mit jeder der Bohrungen 10 verbunden. Durch den Materialabtrag in den Ausnehmungen 11 wird eine Reduzierung der Magnetankermasse und eine bessere hydraulische Durchströmung erreicht, die in einer verbesserten Ventilleistung resultiert.

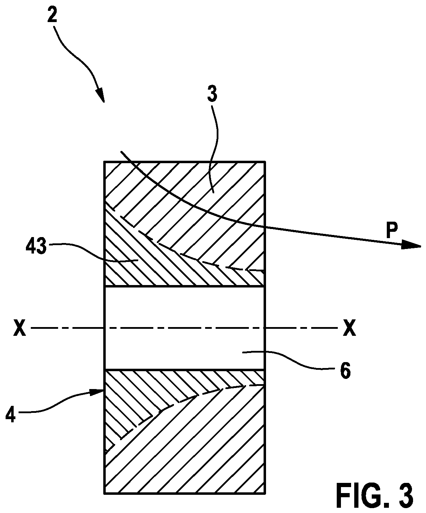

Im Gegensatz zu den zuvor beschriebenen ersten und zweiten Ausführungsbeispielen ist der nichtmagnetische Bereich 4 des in Figur 3 dargestellten dritten Ausführungsbeispiels als sich längs der Mittelachse X-X trichterförmig verjüngendes Innenelement 43 mit zylindrischer Durchgangsöffnung 6 ausgebildet. Hierdurch können große Teile des Magnetankers 2 aus kostengünstigem und leichtem nichtmagnetischen Werkstoff hergestellt werden, ohne den Verlauf der wirksamen Magnetfeldlinien im magnetischen Bereich 3 negativ zu beeinflussen, von denen eine beispielhaft durch einen Pfeil P gekennzeichnet dargestellt ist. Hierdurch wird eine weitere Minimierung des magnetischen Bereichs 3 und somit des Gewichts und der Gesamtkosten des Magnetankers 2 erreicht. Zudem kann die Funktion des nichtmagnetischen harten Ankeranschlags idealerweise auch vom Innenelement 43 übernommen werden.

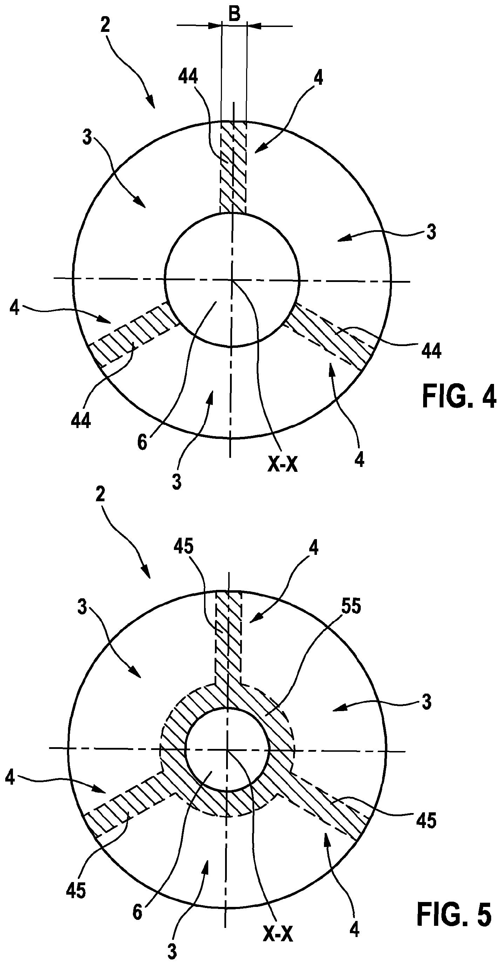

Wie aus der Darstellung von Figur 4 ersichtlich, ist der nichtmagnetische Bereich 4 des Magnetankers 2 des vierten Ausführungsbeispiels aus drei in gleichem Winkelabstand von 120° angeordneten radial zur Mittelachse X-X verlaufenden Segmenten 44 gebildet, die ausgehend vom Außenumfang der Durchgangsöffnung 6 in radialer Richtung und über die gesamte Axiallänge des Magnetankers 2 verlaufen. Hierdurch werden die magnetischen Bereiche 3 durch die elektrisch nichtleitfähigen nichtmagnetischen Bereiche 4 auch elektrisch voneinander getrennt. Die nichtmagnetischen Bereiche 4 sind gleichermaßen mit den magnetischen Bereichen 3 des Magnetankers 2 stoffschlüssig mittels des Zweikomponenten-Pulver-Spritzgussverfahrens verbunden. Eine Breite B der Segmente 44 ist hierbei so groß, insbesondere vorzugsweise zwischen 10 und 100µm, gewählt, dass eine elektrische Trennung von benachbarten magnetischen Bereichen 3 erreicht wird, woraus eine Reduzierung der Wirbelstromverluste resultiert.

Im Gegensatz zum in Figur 4 dargestellten vierten Ausführungsbeispiel ist der nichtmagnetische Bereich 4 des fünften Ausführungsbeispiels ebenfalls aus drei in einem Winkelabstand von 120° angeordneten Segmenten 45 gebildet. Die Segmente 45 sind hierbei zusätzlich durch einen um die zentrale Durchgangsöffnung 6 axial verlaufenden Mantelbereich 55 miteinander verbunden. Dadurch kann der z. B. aus Keramik hergestellte Mantelbereich 55 des nichtmagnetischen Bereichs 4 als verschleißfeste Schicht zur Führung der Ventilnadel im Magnetanker 2 fungieren. Ferner wird dadurch eine besonders lange Dauerhaltbarkeit und hohe Robustheit gegenüber Verschleiß erreicht, die auch einen Einsatz unter erschwerten Bedingungen problemlos ermöglicht. Trotzdem kann der einstückige Magnetanker 2 sehr einfach und kostengünstig als Zweikomponenten-Pulverspritzgussbauteil gefertigt werden.

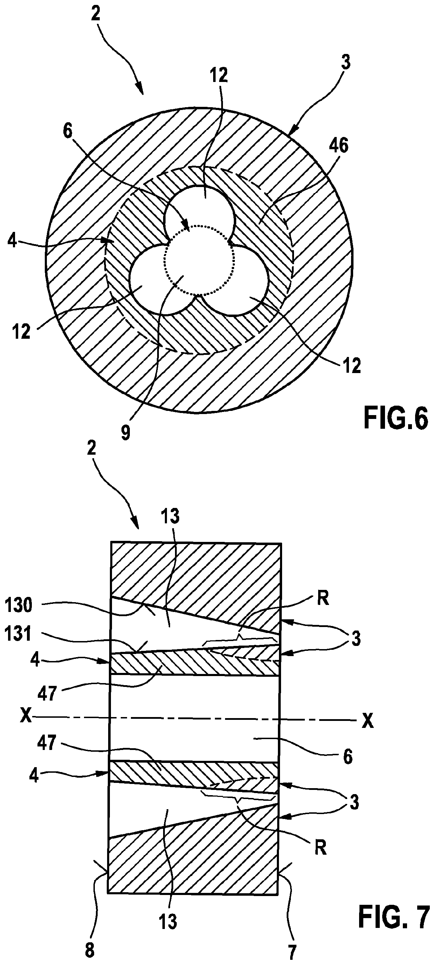

Der nichtmagnetische Bereich 4 des in Figur 6 dargestellten sechsten Ausführungsbeispiels ist in Form eines zylindrisch ausgebildeten Innenelements 46 ausgebildet, das mittels Zweikomponenten-Pulverspritzgussverfahrens stoffschlüssig mit dem magnetischen Bereich 3 verbunden ist. Dass Innenelement 46 weist hierbei die Durchgangsöffnung 6 zur Aufnahme einer hier punktiert veranschaulichten Ventilnadel 9 auf. Die Durchgangsöffnung 6 ist hierbei um Ausnehmungen 12 erweitert, die durch einen jeweils in einem Winkelabstand von 120° erfolgten Materialabtrag gebildet sind. Bei aufgenommener Ventilnadel 9 verbleiben im Innenelement 46 somit, wie aus Figur 6 ersichtlich, die drei sichelförmig ausgebildeten Restquerschnitte der über die gesamte Axiallänge verlaufenden Ausnehmungen 12.

Bei dem in Figur 7 dargestellten siebten Ausführungsbeispiel ist der nichtmagnetische Bereich 4 aus einem im Wesentlichen zylindrischen Innenelement 47 mit der Durchtrittsöffnung 6 gebildet, das radial vom magnetischen Bereich 3 umgeben ist.

Wie aus Figur 7 weiter ersichtlich, sind hierbei zudem ausgehend von der zweiten Ankerstirnseite 8 vier in Richtung der Mittelachse X-X konisch zulaufende Öffnungen 13 im magnetischen Bereich 3 ausgebildet, von denen hier lediglich zwei sichtbar sind. In radialer Richtung nach außen gerichtete Innenwandbereiche 130 der Öffnungen 13 verlaufen hierbei vollständig im magnetischen Bereich 3, während in radialer Richtung nach innen gerichtete Innenwandbereiche 131 der Öffnungen 13 ausgehend von der zweiten Ankerstirnseite 8 zuerst im Innenelement 47 verlaufen. Aufgrund einer Materialreduzierung des Innenelements 47 in Richtung zur ersten Ankerstirnseite 7 verlaufen die nach innen gerichteten Innenwandbereiche 131 in einem Abschnitt R hingegen nicht mehr am Innenelement 47, sondern am magnetischen Bereich 3. Alternativ können anstelle von vier Öffnungen 13 auch zwei, drei oder mehr als vier Öffnungen 13 vorgesehen werden.

Wie in allen Ausführungsbeispielen gezeigt, können somit einstückige Magnetanker 2 als Zweikomponenten-Pulverspritzguss-Bauteile für die erfindungsgemäßen Magnetanker 2 auch mit komplexen Konturen besonders wirtschaftlich in einem einzigen Fertigungsprozess gefertigt werden, was mit konventionellen Fertigungsverfahren nicht erreichbar ist. Neben einer deutlich verbesserten Kosteneffizienz wird hierdurch insbesondere das Dynamikverhalten von Magnetventilen entsprechend der erreichbaren Massenreduzierung sowie der verringerten Wirbelstromverluste deutlich verbessert, was z.B. bei Verwendung als Kraftstoffeinspritzventilen zu erheblich verringertem Kraftstoffverbrauch und Emissionsverhalten des Motors beiträgt. Ferner sind die in den zuvor beschriebenen Ausführungsbeispielen veranschaulichten Bauartvarianten beliebig kombinierbar.

## Patentansprüche

1. Magnetanker für einen Magnetaktor, insbesondere für ein Magnetventil, umfassend:
wenigstens einen magnetischen Bereich (3) und wenigstens einen nichtmagnetischen Bereich (4),
wobei der Magnetanker (2) als einstückiges, zylindrisches Bauteil mit einer ersten und zweiten Ankerstirnseite (7, 8) ausgebildet ist,
wobei die magnetischen und nichtmagnetischen Bereiche (3, 4) stoffschlüssig mittels eines Zweikomponenten-Pulver-Spritzgussverfahrens miteinander verbunden sind,
wobei der magnetische Bereich (3) und der nichtmagnetische Bereich (4) in axialer Richtung zumindest bis zur ersten Ankerstirnseite (7) reichen, und
wobei der Magnetanker (2) mit einer zentralen Durchgangsöffnung (6) ausgebildet ist,
**dadurch gekennzeichnet,**
**dass** zumindest ein nichtmagnetischer Bereich (4) als Zylinderbereich (55) oder in axialer Richtung als sich verjüngender Bereich (43) ausgebildet ist, der jeweils die zentrale Durchgangsöffnung (6) umgibt.

2. Magnetanker nach Anspruch 1, **dadurch gekennzeichnet, dass** der nichtmagnetische Bereich (4) elektrisch nichtleitfähig ist.

3. Magnetanker nach Anspruch 1 oder 2, **dadurch gekennzeichnet, dass** der zumindest eine nichtmagnetische Bereich (4) einen Anschlag an der ersten und/oder der zweiten Ankerstirnseite (7, 8) bildet.

4. Magnetanker nach einem der Ansprüche 1 bis 3, **dadurch gekennzeichnet, dass** mehrere nichtmagnetische Bereiche (4) elektrisch nichtleitfähig und segmentartig ausgebildet sind.

5. Magnetanker nach Anspruch 4, **dadurch gekennzeichnet, dass** die mehreren nichtmagnetischen Bereiche (4) in Umfangsrichtung gleich beabstandet angeordnet sind.

6. Magnetanker nach einem der vorhergehenden Ansprüche, **dadurch gekennzeichnet, dass** der magnetische Bereich (3) und der nichtmagnetische Bereich (4) in radialer Richtung aneinander angrenzend angeordnet sind.

7. Magnetanker nach einem der vorhergehenden Ansprüche, **dadurch gekennzeichnet, dass** zumindest ein nichtmagnetischer Bereich (41a, 41b; 42) an der ersten und/oder der zweiten Ankerstirnseite (7, 8) vorsteht.

8. Magnetanker nach Anspruch 1, **dadurch gekennzeichnet, dass** der Zylinderbereich (55), der die zentrale Durchgangsöffnung (6) umgibt, vollständig durch ein verschleißfestes Material gebildet ist.

9. Magnetanker nach einem der vorhergehenden Ansprüche, **dadurch gekennzeichnet, dass** die nichtmagnetischen Bereiche (44, 45) aus elektrisch nichtleitendem Material ausgebildet sind und in radialer Richtung über die gesamte Axiallänge des Magnetankers (2) verlaufen.

10. Magnetanker nach einem der vorhergehenden Ansprüche, **dadurch gekennzeichnet, dass** magnetische Bereiche (3) aus einem Magnetwerkstoff mit hoher Sättigungsinduktion ausgebildet sind und nichtmagnetische Bereiche (4) aus einem Keramikwerkstoff oder einem Hartmetall ausgebildet sind.

11. Magnetventil, insbesondere Einspritzventil, umfassend einen Magnetanker nach einem der vorhergehenden Ansprüche.

## Claims

1. Magnet armature for a magnetic actuator, in particular for a magnetic valve, comprising:
at least one magnetic region (3) and at least one non-magnetic region (4),
wherein the magnet armature (2) is formed as a single-piece cylindrical component with a first and a second armature face side (7, 8),
wherein the magnetic and non-magnetic regions (3, 4) are cohesively connected to one another by means of a two-component powder injection moulding process, wherein the magnetic region (3) and the non-magnetic region (4) extend in an axial direction at least as far as the first armature face side (7), and
wherein the magnet armature (2) is formed with a central passage opening (6),
**characterized**
**in that** at least one non-magnetic region (4) is formed as a cylindrical region (55) or as a region (43) which tapers in an axial direction, which region in each case surrounds the central passage opening (6).

2. Magnet armature according to Claim 1, **characterized in that** the non-magnetic region (4) is electrically non-conductive.

3. Magnet armature according to Claim 1 or 2, **characterized in that** the at least one non-magnetic region (4) forms a stop on the first and/or second armature face side (7, 8).

4. Magnet armature according to any of Claims 1 to 3, **characterized in that** multiple non-magnetic regions (4) are of electrically non-conductive and segment-like form.

5. Magnet armature according to Claim 4, **characterized in that** the multiple non-magnetic regions (4) are arranged so as to be evenly spaced apart in a circumferential direction.

6. Magnet armature according to any of the preceding claims, **characterized in that** the magnetic region (3) and the non-magnetic region (4) are arranged adjacent to one another in a radial direction.

7. Magnet armature according to any of the preceding claims, **characterized in that** at least one non-magnetic region (41a, 41b; 42) projects on the first and/or the second armature face side (7, 8).

8. Magnet armature according to Claim 1, **characterized in that** the cylindrical region (55), which surrounds the central passage opening (6), is formed entirely by a wear-resistant material.

9. Magnet armature according to any of the preceding claims, **characterized in that** the non-magnetic regions (44, 45) are formed from electrically nonconductive material and run in a radial direction over the entire axial length of the magnet armature (2).

10. Magnet armature according to any of the preceding claims, **characterized in that** magnetic regions (3) are formed from a magnetic material with high saturation induction, and non-magnetic regions (4) are formed from a ceramic material or a hard metal.

11. Magnetic valve, in particular injection valve, comprising a magnet armature according to any of the preceding claims.

## Revendications

1. Induit magnétique pour un actionneur magnétique, en particulier pour une électrovanne, comprenant :
au moins une région magnétique (3) et au moins une région non magnétique (4),
l'induit magnétique (2) étant réalisé sous forme de composant d'une seule pièce cylindrique avec un premier et un deuxième côté frontal d'induit (7, 8), les régions magnétiques et non magnétiques (3, 4) étant connectées par liaison de matière l'une à l'autre au moyen d'un procédé de moulage par injection de poudre à deux composants, la région magnétique (3) et la région non magnétique (4) s'étendant dans la direction axiale au moins jusqu'au premier côté frontal d'induit (7) et l'induit magnétique (2) étant réalisé avec une ouverture de passage centrale (6),
**caractérisé en ce**
**qu'**au moins une région non magnétique (4) est réalisée sous forme de région cylindrique (55) ou sous forme de région (43) se rétrécissant dans la direction axiale, qui entoure à chaque fois l'ouverture de passage centrale (6).

2. Induit magnétique selon la revendication 1, **caractérisé en ce que** la région non magnétique (4) n'est pas conductrice de l'électricité.

3. Induit magnétique selon la revendication 1 ou 2, **caractérisé en ce que** l'au moins une région non magnétique (4) forme une butée au niveau du premier et/ou du deuxième côté frontal d'induit (7, 8) .

4. Induit magnétique selon l'une quelconque des revendications 1 à 3, **caractérisé en ce que** plusieurs régions non magnétiques (4) sont réalisées de manière non électriquement conductrice et sous forme segmentée.

5. Induit magnétique selon la revendication 4, **caractérisé en ce que** la pluralité de régions non magnétiques (4) sont disposées à égale distance dans la direction périphérique.

6. Induit magnétique selon l'une quelconque des revendications précédentes, **caractérisé en ce que** la région magnétique (3) et la région non magnétique (4) sont disposées de manière adjacente l'une à l'autre dans la direction radiale.

7. Induit magnétique selon l'une quelconque des revendications précédentes, **caractérisé en ce qu'**au moins une région non magnétique (41a ; 41b ; 42) fait saillie au niveau du premier et/ou du deuxième côté frontal d'induit (7, 8).

8. Induit magnétique selon la revendication 1, **caractérisé en ce que** la région cylindrique (55) qui entoure l'ouverture de passage centrale (6) est formée entièrement par un matériau résistant à l'usure.

9. Induit magnétique selon l'une quelconque des revendications précédentes, **caractérisé en ce que** les régions non magnétiques (44, 45) sont réalisées à partir de matériaux non conducteurs d'électricité et s'étendent dans la direction radiale sur toute la longueur axiale de l'induit magnétique (2).

10. Induit magnétique selon l'une quelconque des revendications précédentes, **caractérisé en ce que** des régions magnétiques (3) sont réalisées à partir d'un matériau magnétique avec une grande induction à saturation et des régions non magnétiques (4) sont réalisées à partir d'un matériau céramique ou d'un métal dur.

11. Électrovanne, en particulier soupape d'injection comprenant un induit magnétique selon l'une quelconque des revendications précédentes.
